# EUROPÄISCHE PATENTSCHRIFT

(11) **EP 3 222 128 B1**
(45) Veröffentlichungstag und Bekanntmachung des Hinweises auf die Patenterteilung: **24.10.2018**
(21) Anmeldenummer: 17000159.8
(22) Anmeldetag: 01.02.2017
(51) Int. Cl.: A01B 35/22, A01B 35/26

(54) **GRUBBERELEMENT FÜR EIN GERÄT ZUR KONSERVIERENDEN BODENBEARBEITUNG UND LANDWIRTSCHAFTLICHES GERÄT DAMIT**
CULTIVATOR ELEMENT FOR AN APPARATUS FOR CONSERVING SOIL CULTIVATION, AND AGRICULTURAL IMPLEMENT USING THE SAME
ÉLÉMENT DE CULTIVATEUR POUR UN APPAREIL DE TRAVAIL DU SOL EN AGRICULTURE DE CONSERVATION ET APPAREIL EN ÉTANT ÉQUIPÉ

(30) Priorität: 15.02.2016 AT 752016
(43) Veröffentlichungstag der Anmeldung: 27.09.2017
(73) Patentinhaber: Dick, Bernhard, 4753 Taiskirchen (AT)
(72) Erfinder: Dick, Bernhard, 4753 Taiskirchen (AT)
(74) Vertreter: Kovac, Werner

(56) Entgegenhaltungen:
- FR-A1- 2 382 166
- NL-C- 103 987
- RU-C1- 2 028 740
- US-A- 2 396 132

## Beschreibung

Die Erfindung betrifft ein Grubberelement für ein Gerät zur konservierenden Bodenbearbeitung, im Wesentlichen bestehend aus einer Grubberzinke, einer Schmalschar und einer Scharverbreiterung, welche beiderseits der Schmalschar je eine in einem Adapter drehbar gelagerte Scheibe aufweist.

Es ist aus der Praxis bekannt, Grubberelemente zur besseren Aufbereitung des Ackerbodens mit Flügelscharen auszustatten. Das sind nahe dem unteren Ende des Zinkens seitlich abstehende starre Flügel. Deren Reibungswiderstand ist erheblich, was den Zugkraftbedarf und damit den Treibstoffverbrauch des Zugfahrzeuges erhöht. An den "Anströmkanten" der Flügel bleiben Wurzelreste hängen, was den Zugkraftbedarf weiter erhöht und die Durchmischung der Erde mit Humus und Pflanzenrückständen behindert.

Aus der Patentschrift RU 2028740 C1 ist ein gattungsgemäßes Grubberelement bekannt, das als Scharverbreiterung zwei in Querrichtung erheblich beabstandete konische Scheiben mit radial abstehenden Zähnen hat. Die Scheiben sind, soweit erkennbar, drehbar und können bei der Fortbewegung des Gerätes durch den Ackerboden in Drehung versetzt werden, wenn sie nur (oder überwiegend) an der dem Zinken abgewandten Seite ihrer Kontur mit dem Boden in Berührung sind. Das aber ist nicht erkennbar. Eine der Fahrgeschwindigkeit des Gerätes entsprechende Umfangsgeschwindigkeit der Scheiben ist so schwerlich erreichbar, zumal diese durch Wurzelreste sogar gegensinnig werden kann. Auch bei diesem Gerät treten dieselben negativen Folgen auf, wie bei dem aus der Praxis bekannten Gerät.

Es ist daher Aufgabe der Erfindung, ein gattungsgemäßes Gerät so zu verbessern, dass die genannten negativen Folgen nicht auftreten. Die Scheiben sollen ungehindert und mit möglichst geringem Schlupf vom Ackerboden in Drehung versetzt werden, nicht verstopfen beziehungsweise sogar selbstreinigend sein, und eine gute Durchmischung von Erde und Pflanzenresten erreichen. Dabei soll die erforderliche Zugkraft minimal sein, was dem das Gerät tragenden Ackerschlepper, dessen Treibstoffverbrauch und über verringerte Schadstoffemissionen auch der Umwelt zugutekommt.

Erfindungsgemäß wird das mit den Merkmalen des 1. Anspruchs erreicht.

Die Platte des Adapters ist gerade so breit, dass sie die Aufnahmen für die Drehachsen umschließt und den Teil der Scheiben Abdeckt, der sich entgegen der Fahrtrichtung des Gerätes bewegt. Die pfeilartigen Stirnkanten des Adapters lenken die Ackererde mit geringem Zugkraftbedarf seitlich ab. Dadurch, dass der Abstand der Drehachsen kleiner als der Durchmesser der Scheiben ist, überdecken sich die innerhalb der Drehachsen liegenden Bereiche der Scheiben, sodass dort keine entgegen der Drehrichtung der Scheiben wirkende Bodenreibung auftritt. So werden die Scheiben mit minimalem Schlupf und maximalem Drehmoment in gegensinnige Drehung versetzt.

Um einander teilweise überdecken zu können, sind die Scheiben in Achsrichtung um ihre Dicke gegeneinander versetzt. Dadurch wirken sie auf der Abströmseite zusammen. Sie reinigen einander gegenseitig und zerschneiden an ihnen hängengebliebene Wurzelreste. Sie sind somit selbstreinigend, was ein Ansteigen des Zugkraftbedarfes bei Verunreinigung oder Verstopfung der Scheiben verhindert.

In einer vorteilhaften Weiterbildung sind die zur Horizontalen geneigten Scheiben höher als die Spitze der Schmalschar angeordnet. Durch die von der Schmalschar gezogene tiefere Furche werden die entgegen der Drehrichtung der Scheiben wirkenden Bodenreibungskräfte weiter vermindert und die durch die geneigten Scheiben geförderte Durchmischung von Erde, Humus und Pflanzenresten weiter verbessert.

In einer vorteilhaften Ausführungsform ist der Adapter mit der Zinke verschraubt, wobei die Zinke oder der Adapter eine Anzahl Querbohrungen zur wahlweisen Positionierung des Adapters in verschiedenen Stellungen hinsichtlich Neigung und Arbeitstiefen hat. So sind die Grubberelemente der jeweiligen Bodenbeschaffenheit oder sonstigen Anforderungen anpassbar. Bei entsprechender Gestaltung des Adapters kann eine starre Scharverbreiterung nach dem Stand der Technik durch die erfindungsgemäße ersetzt werden. Diese ist somit nachrüstbar.

Die Scheiben können in verschiedener Form mit verschiedenen Konturen und Durchmessern ausgebildet sein. Als planparallele Kreisscheiben sind sie einfach und billig herzustellen. Vorzugsweise haben sie eine scharfkantige Kontur. Das senkt den Bodenwiderstand und zerschneidet mitgerissene Wurzelteile.

In Weiterbildung weist die Kontur der Scheiben Einbuchtungen auf. Dadurch wird der Antrieb durch die Bodenreibung, die selbstreinigende Wirkung, und die Durchmischung weiter verbessert.

Gemäß einem weiteren Aspekt ist die Schmalschar an der Stirnseite der Zinke angebracht und nach oben schließt ein Leitblech an sie an.

Die Erfindung betrifft auch ein ganzes landwirtschaftliches Gerät zur konservierenden Bodenbearbeitung, das mit den erfindungsgemäßen Grubberzinken ausgestattet ist.

Im Folgenden wird die Erfindung anhand eines Ausführungsbeispiels des erfindungsgemäßen Grubberelementes beschrieben und erläutert. Es stellen dar:
- Fig.1:: ein erfindungsgemäßes Grubberelement in axonometrischer Darstellung, von schräg vorne gesehen,
- Fig.2:: Detail A in Fig. 1 vergrößert, von der Seite gesehen und in Arbeitsstellung,
- Fig.3:: Ansicht von vorne gemäß Pfeil III in Fig. 2,
- Fig.4:: Schnitt nach IV-IV in Fig. 3, vergrößert.

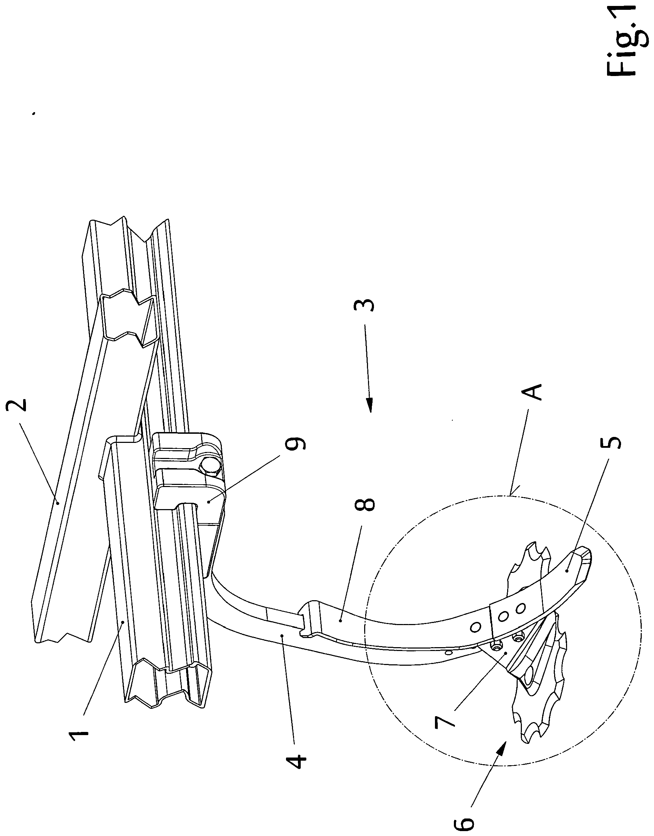

In **Fig. 1** ist der Rahmen einer landwirtschaftlichen Bodenbearbeitungsmaschine durch einen Querträger 1 und einen Längsträger 2 angedeutet. Der Rahmen ist in der üblichen Weise mit einem Traktor verbunden und kann noch andere Bodenbearbeitungswerkzeuge (z.B. Scheibenpflugscharen) aufnehmen. An dem Querträger 1 ist eine Anzahl Grubberelemente 3 in bestimmten Abständen befestigt. Die Befestigung kann beliebig ausgebildet sein, durch Schweißen, vorzugsweise aber mittels eines am Querträger 1 verschiebbaren und feststellbaren Verbindungsstücks 9.

Das Grubberelement 3 besteht aus einer C-förmig gebogenen Grubberzinke 4 mit oben dem Verbindungsstück 9, aus einer an der Stirnseite de Grubberzinke angebrachten Schmalschar 5 und aus einer summarisch mit 6 bezeichneten Scharverbreiterung, die mittels eines Adapters 7 mit der Grubberzinke 4 verbunden ist. An die Schmalschar 5 kann nach oben noch ein Leitblech 8 anschließen.

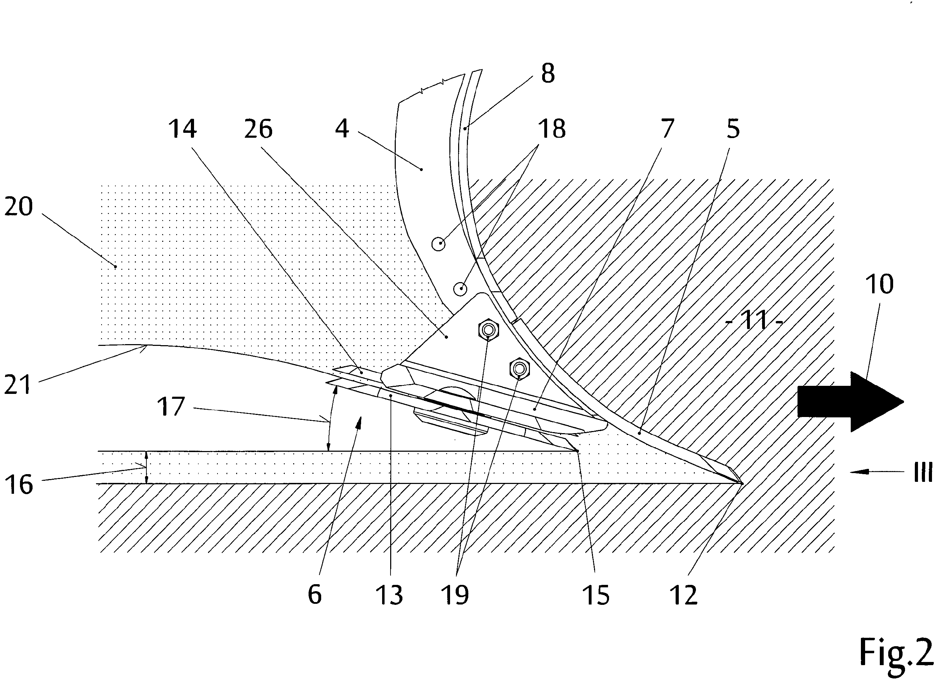

**Fig. 2** zeigt das erfindungsgemäße Grubberelement 3 im Einsatz, wobei die Fahrt- und Bearbeitungsrichtung durch den Pfeil 10 angedeutet ist. Die Anströmung der Ackererde erfolgt in der dem Pfeil 10 entgegengesetzten Richtung. Die Schmalschar 5 taucht in den Ackerboden 11 ein, ihre Spitze 12 bestimmt die Bearbeitungstiefe. Die Scharverbreiterung 6 wirkt mittels zweier im Wesentlichen kreisförmiger Scheiben 13,14 außerhalb der Schmalschar 5 auf den Ackerboden ein. Die Scheiben 13,14 sind drehbar im Adapter 7 gelagert und sind bezüglich der Horizontalen um einen spitzen Anstellwinkel 17 geneigt. Ihr tiefster Punkt liegt in einem Abstand 16 über der Spitze 12 der Schmalschar 5. Abstand 16 und Winkel 17 können den Gegebenheiten entsprechend eingestellt werden. Dazu sind beispielsweise im Adapter 7 und in der Zinke 4 eine Anzahl Bohrungen 18,19 für nicht dargestellte Schraubbolzen vorgesehen, die die Verbindung in verschiedenen Stellungen ermöglichen. Die Scheiben hinterlassen einen gelockerten und durchmischten Ackerboden 20, was durch die Kurve 21 angedeutet ist.

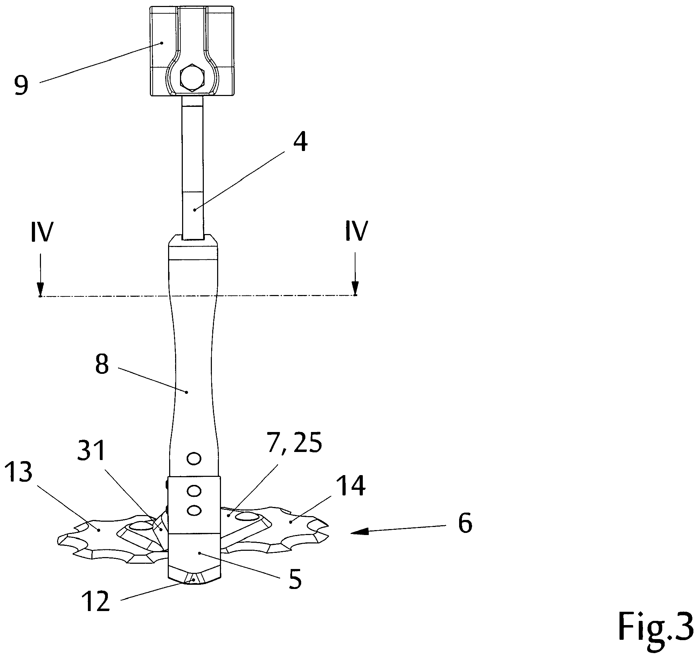

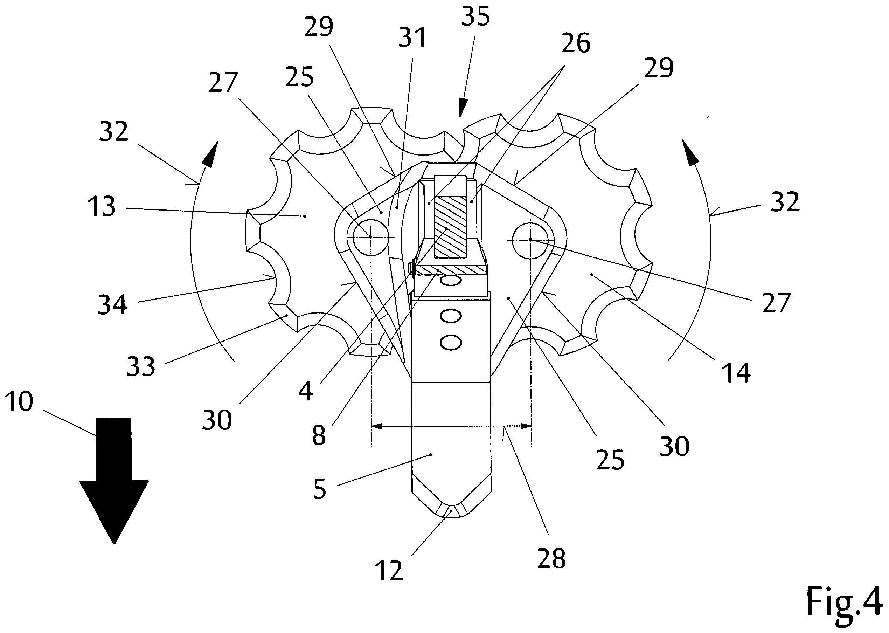

**Fig. 3** und **Fig. 4** zeigen die Scharverbreiterung 6 im Detail. Der Adapter besteht aus mit der Zinke 4 verschraubten Befestigungslaschen 26 und einer dazu normalen Platte 25. Sie könnte auch beiderseits leicht geneigt sein. Die Platte ist im Wesentlichen eben, aber mit einem Versatz 31 entsprechend dem axialen Versatz der Scheiben 13,14, und bildet auf ihrer Anströmseite gepfeilte und zu Schneiden abgeschrägte Stirnkanten 30 und auf der Abströmseite ähnliche Hinterkanten 29. Innerhalb der Stirnkanten 30 und Hinterkanten 29 ist beiderseits je eine Aufnahme für Drehachsen 27 der Scheiben 13,14 vorgesehen. Die Drehachsen 27 haben voneinander einen horizontalen Abstand 28, der kleiner als der Durchmesser der Scheiben 13,14 ist. Der Drehsinn der Scheiben 13,14 ist durch die Bogenpfeile 32 angedeutet, und die Fahrtrichtung - entgegengesetzt der Fließrichtung des Ackerbodens - durch den Pfeil 10.

Die Scheiben 13, 14 sind im Wesentlichen kreisförmig und in Richtung ihrer Achsen soweit gegeneinander versetzt, dass sie einander überlappen können, entsprechend dem geringeren Abstand 28 ihrer Achsen 27. Die Kontur und Oberfläche der Scheiben 13,14 kann sehr verschieden gestaltet sein. In der hier gezeigten Ausführungsform haben sie messerscharfe Kanten 33 und über den Umfang verteilte Einbuchtungen 34. So bilden sie bei ihrem Zusammentreffen auf der Abströmseite eine Schneidzone 35.

Die Arbeitsweise ist wie folgt: Der Ackerboden 11 "fließt" entgegen der Fahrtrichtung 10 auf die Schmalschar 5 zu und wird von dieser in zwei Teilströme geteilt. Die Teilströme werden von den gepfeilten Stirnkanten 30 weiter abgelenkt und fließen über den äußeren Teil der Oberseite der Scheiben 13,14. Durch Reibung werden die Scheiben in Drehung versetzt.

Wesentlich ist, dass nur die Teile der Scheiben 13,14 außerhalb ihrer Drehachsen 27 mit den Teilströmen in Berührung kommen. Nur dort stimmt die Fließrichtung mit dem Drehsinn 32 überein. Berührung innerhalb der Drehachsen 27 würde dem Drehsinn 32 entgegen wirken. Das wird vor allem durch die Schmalschar 5 und die gepfeilten Kanten 30 verhindert, aber auch durch den Höhenabstand 16 und den Neigungswinkel 17. So werden die Scheiben 13,14 mit einem Minimum an Schlupf und Zugkraftbedarf in Drehung versetzt.

Die Einbuchtungen 34 der beiden Scheiben 13,14 verbessern die Durchmischung des Ackerbodens und bilden bei ihrem Zusammentreffen im Abströmbereich eine Schneidzone 35, in der mitgeführte Pflanzenteile zerkleinert werden. Ab der Schneidzone 35 wirken die beiden Scheiben 13,14 in ihrem Überlappungsbereich zusammen und reinigen einander gegenseitig. Die Hinterkanten 29 der Platte 25 tragen zur Selbstreinigung bei. Der Überlappungsbereich ist in den Figuren nicht sichtbar, weil von der Platte 25 abgedeckt. Die Selbstreinigung der Scheiben 13,14 verhindert ein Ansteigen des Zugkraftbedarfes durch Verstopfung und verklemmte Pflanzenteile.

Von der beschriebenen Ausführungsform kann im Umfang der Patentansprüche abgewichen werden. Insgesamt wird die gestellte Aufgabe so vollständig gelöst.

## Patentansprüche

1. Grubberelement für ein Gerät zur konservierenden Bodenbearbeitung, im Wesentlichen bestehend aus einer Grubberzinke(4), einer Schmalschar (5)und einer Scharverbreiterung (6), welche beiderseits der Schmalschar (5)je eine in einem Adapter (7) drehbar gelagerte Scheibe(13,14)aufweist, **dadurch gekennzeichnet, dass**
a) der Adapter (7) eine Platte (25) mit pfeilartig geneigten Stirnkanten (30) bildet, welche Platte Aufnahmen für zu ihr normale Drehachsen (27) für die Scheiben (13,14) aufweist, wobei der horizontale Abstand (28) zwischen den Drehachsen (27) kleiner als der Durchmesser der einzelnen Scheiben (13,14) ist, und dass
b) die Scheiben (13,14) in Richtung ihrer Drehachsen (27) um ihre Dicke gegeneinander versetzt sind, sodass sie einander in dem von der Platte (25) überdeckten Bereich überschneiden.

2. Grubberelement nach Anspruch 1, **dadurch gekennzeichnet, dass** die Platte (25) und die zur Horizontalen geneigten Scheiben (13,14) höher als die Spitze (12) der Schmalschar (5) angeordnet sind.

3. Grubberelement nach Anspruch 1, **dadurch gekennzeichnet, dass** der Adapter (7) mindestens eine zur Platte normale Befestigungslasche (26) zur Verbindung mit der Zinke (4) mittels Schraubbolzen (n.d.) aufweist, und die Zinke (4) und/oder der Adapter (7) eine Anzahl Querbohrungen (18,19) zur wahlweisen Positionierung des Adapters (7) in verschiedenen Stellungen hat.

4. Grubberelement nach Anspruch 1 oder 2, **dadurch gekennzeichnet, dass** die Scheiben (13,14) planparallele Kreisscheiben sind.

5. Grubberelement nach Anspruch 1 oder 2, **dadurch gekennzeichnet, dass** die Scheiben (13,14) eine Scharfkantige Kontur (33) aufweisen.

6. Grubberelement nach Anspruch 1, **dadurch gekennzeichnet, dass** die Scheiben (13,14) eine gewölbte und/oder gerillte Oberfläche aufweisen.

7. Grubberelement nach Anspruch 1, **dadurch gekennzeichnet, dass** die Kontur (33) der Scheiben Einbuchtungen (34) aufweist.

8. Grubberelement nach Anspruch 1 oder 2, **dadurch gekennzeichnet, dass** die Schmalschar (5) an der Stirnseite der Zinke (4) angebracht ist und nach oben ein Leitblech (8) an die Schmalschar (5) anschließt.

9. Landwirtschaftliches Gerät zur konservierenden Bodenbearbeitung, versehen mit Grubberelementen nach einem der Ansprüche 1 bis 8.

## Claims

1. Cultivator element for an apparatus for conserving soil cultivation essentially consisting of a shank (4), a narrow ploughshare (5) and a share-extension (6) which comprises on either side of the narrow ploughshare (5) a disk (13,14) rotatably journalled in an adapter (7), **caracterized** in that
a) The adapter (7) is a plate (25) with arrow-like inclined leading edges (30), the plate (25) comprising orthogonal axles of rotation (27) for the disks (13,14), the horizontal distance (28) between the axles of rotation (27) being smaller than the diameter of each disk (13,14), and that
b) The disks (13,14) are offset with regard to each other in the direction of the axles of rotation (27) to the extent of their thickness, so that they overlap each other in the region covered by the plate (25).

2. Cultivator element according to claim 1, **caracterized** in that the plate (25) and the disks (13,14) are located higher than the tip (12) of the narrow ploughshare (5), the disks (13,14) being inclined with regard to a horizontal line.

3. Cultivator element according to claim 1, **caracterized** in that the adapter (7) comprises at least one bracket (26) at a right angle with the plate (25) for joining it to the shank (4) by means of bolts (not shown), and that the shank (4) and/or the adapter (7) has a number of lateral bores (18,19) for selective positioning the adapter (7) in various positions.

4. Cultivator element according to claim 1 or 2, **caracterized** in that the disks (13,14) are plane parallel circular disks.

5. Cultivator element according to claim 1 or 2, **caracterized** in that the disks (13,14) have a cutting-edge contour (33).

6. Cultivator element according to claim 1, **caracterized** in that the disks (13,14) have a curved and/or a profiled surface.

7. Cultivator element according to claim 1, **caracterized** in that the contour (33) of the disks (13,14) has recesses (34).

8. Cultivator element according to claim 1 or 2, **caracterized** in that the narrow ploughshare (5) is located at the leading side of the shank (4) and is continued by a guiding plate (8).

9. Agricultural implement for conserving soil cultivation provided with Cultivator elements according to any oft he claims 1 to 8.

## Revendications

1. Elément de cultivateur pour un appareil de travail du sol en agriculture de conservation comprenant une jambe (4), un soc étroit (5) et une extension de soc (6), cette extension comprenant de chaque coté du soc étroit (5) un disque (13,14) monté à rotation dans un adaptateur (7), **caractérisé en ce que**
a) L'adaptateur (7) est une plaque (25) avec des bords d'attaque (30) inclinés à la manière d'une flèche, la plaque (25) comprenant des axes de rotation (27) orientés rectangulaires pour les disques (13,14), la distance horizontale (28) entre les axes de rotation (27) étant inférieure au diamètre de chaque disque (13,14), et **en ce que**
b) Les disques (13,14) sont décalés l'un par rapport à l'autre en direction des axes de rotation (27) par leur epaisseur, de façon à ce qu'ils se chevauchent dans la région couverte par la plaque (25).

2. Elément de cultivateur selon la revendication 1, **caractérisé en ce que** la plaque (25) et les disques (13,14) sont disposés à un niveau plus élevé que la pointe (12) du soc étroit (5), les disques (13,14) étant inclinés par rapport à une ligne horizontale.

3. Elément de cultivateur selon la revendication 1, **caractérisé en ce que** l'adaptateur (7) comprend au moins une console (26) normale à la plaque (25), dans le but de le joindre avec la jambe (4) moyennant des boulons (non visible) et **en ce que** la jambe (4) ou l'adaptateur 7 son pourvus d'un nombre d'alésages transversaux (18,19) pour positionner au choix l'adaptateur (7) dans des positions différentes.

4. Elément de cultivateur selon la revendication 1, **caractérisé en ce que** les disques (13,14) sont des disques circulaires aux faces parallèles.

5. Elément de cultivateur selon la revendication 1, **caractérisé** en ce les disques (13,14) ont un contour (33) à bord vif.

6. Elément de cultivateur selon la revendication 1, **caractérisé en ce que** les disques (13,14) ont une surface bombée ou profilée.

7. Elément de cultivateur selon la revendication 1, **caractérisé en ce que** le contour (33) des disques (13,14) est pourvu des dentelures (34).

8. Elément de cultivateur selon la revendication 1, **caractérisé en ce que** le soc étroit (5) est disposé au coté menant de la jambe (4) et est prolongé par un tôle de guidage (8).

9. Appareil d'agriculture de conservation équipé d'éléments de cultivateur selon une des revendications 1 à 8.
